# EUROPEAN PATENT APPLICATION

(11) **EP 4 302 975 A1**
(43) Date of publication of application: **10.01.2024**
(21) Application number: 23382700.5
(22) Date of filing: 07.07.2023
(51) Int. Cl.: B29C 70/70, B29D 99/00, B29C 33/76, B29K 75/00, B29K 309/08

(54) **FILLING ELEMENT FOR THE MANUFACTURE OF AIRCRAFT PARTS AND AIRCRAFT PART COMPRISING SUCH A FILLING ELEMENT**

(30) Priority: 08.07.2022 ES 202231152 U
(71) Applicant: AIRBUS OPERATIONS, S.L.U., 28906 Getafe (Madrid) (ES)
(72) Inventor: GUINALDO FERNÁNDEZ, Enrique, 28906 GETAFE (Madrid) (ES)
(74) Representative: Herrero & Asociados, S.L.

(57) **Abstract**

The filling element for the manufacture of aircraft parts comprises a filling body (1) made of polyurethane or silicone, and may also comprise joining tapes (4), e.g., made of polyurethane.

It allows to improve the mechanical performance of the aircraft part manufactured with such a filling element, as its material is more flexible than traditional epoxy resins, to fill the gap between preforms with a material that prevents any contamination during the manufacturing of the part or its operational life, to avoid mechanical failures, as it is bakeable and compatible with epoxy resins, and to provide support and maintain the shape during the manufacturing of the part, for example against the pressure required to evacuate volatiles in composite elements.

## Description

### OBJECT OF THE INVENTION

The present invention relates to a filling element for the manufacture of aircraft parts, in particular a filling element to be placed between preforms for the formation of aircraft parts.

The present invention also relates to an aircraft part comprising such a filling element.

### BACKGROUND TO THE INVENTION

Aircraft parts are manufactured using preforms which, when joined together, form a part.

Filling the gaps between preforms requires the use of filling elements, and a requirement of these filling elements is that the material used for the filling elements is of a similar nature or at least physically and chemically compatible with the material to be used in the preforms.

In addition, these filling elements provide a good interface to the preforms to prevent mechanical failure and provide support and maintain the shape during part manufacture, e.g. against pressure.

These filling elements are usually made of fibres, e.g. uniaxial at 0°, from a preimpregnated material, e.g. with epoxy resin. They can also be made of fibres, e.g. at 0°, which are subsequently infused with resin.

They are usually manufactured by winding tapes at 0° in the desired shape, which are then formed on the part itself before curing or by means of a specific mechanical forming system.

Although these filling elements are not taken into account in the stress analysis as loadbearing structural elements, they have a direct influence on the mechanical performance and must therefore be prevented from failing under loads.

### DESCRIPTION OF THE INVENTION

Therefore, the aim of the invention is to provide a filling element for the manufacture of aircraft parts that prevents premature failure of the filling element, or of the interface between the filling element and the preform in parts subjected to high deployment loads at minimum cost.

The filling element for the manufacture of aircraft parts and the aircraft part comprising said filling element in accordance with the present invention are described in the independent claims.

Additional optional features are included in the dependent claims.

In particular, according to a first aspect, the filling element for the manufacture of aircraft parts according to the present invention comprises a polyurethane or silicone body.

In addition, the filling element for the manufacture of aircraft parts according to the present invention may also comprise bonding strips, which are, for example, made of polyurethane.

According to a second aspect, the aircraft part according to the present invention comprises a plurality of preforms joined together and a filling element according to the first aspect described above.

Preferably, said preforms are made of polymeric material (thermosetting, thermoplastic, etc.) reinforced with carbon fibers and the filling element is located between the preforms.

With the filling element for the manufacture of aircraft parts and with the aircraft part according to the present invention the following advantages, among others, are achieved:
- It improves the mechanical performance of the aircraft part made with such a filling element, as its material is more flexible than traditional epoxy resins;
- It allows the gap between the preforms to be filled with a material that prevents any contamination during the manufacture of the part or its operational life;
- It provides a good interface between preforms, avoiding mechanical failure, as it is bakeable and compatible with epoxy resins; and
- It provides support and maintains shape during part manufacture, for example, against the pressure required to evacuate volatiles in composite elements.

### DESCRIPTION OF THE DRAWINGS

In order to supplement the description herein and to assist in a better understanding of the features of the invention, in accordance with some preferred examples of practical embodiments thereof, there is attached hereto as an integral part of this description a set of drawings in which, by way of illustration and without limitation, the following has been depicted:
Figure 1 is a section view of an aircraft part according to a first embodiment, comprising the filling element according to the present invention; and
Figure 2 is a section view of an aircraft part according to a second embodiment, comprising the filling element according to the present invention.

### DESCRIPTION OF PREFERRED EMBODIMENTS OF THE INVENTION

A detailed explanation of examples of preferred embodiments of the subject matter of the present invention is given below with the aid of the figures referred to above.

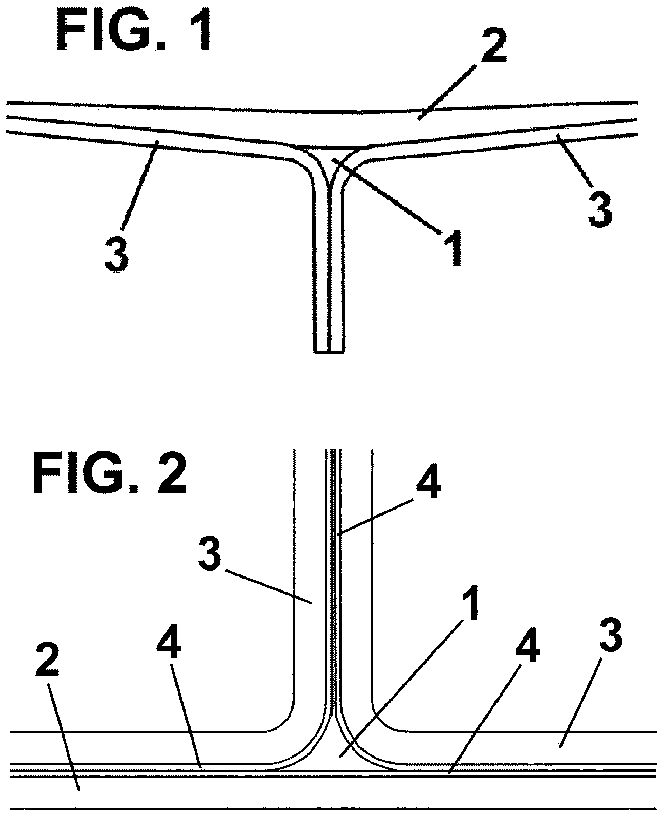

Figures 1 and 2 show in section two aircraft parts in accordance with the present invention.

In Figure 1, the part is T-shaped and is formed from two types of preforms: a first preform (2) substantially straight, or slightly curved, and two second preforms (3) with an L-shape, which are joined together.

These preforms (2, 3) are preferably of carbon fiber reinforced polymeric material but could be of any suitable material.

At the junction between the preforms is placed the filling element according to the present invention, comprising a filling body (1) of polyurethane or silicone.

This polyurethane or silicone filling body (1) is formed by extrusion, injection molding or lamination to the desired shape.

In figure 2, the part is also T-shaped and is formed from two types of preforms: a first preform (2) substantially straight and two second preforms (3) with an L-shape, which are joined together.

In this embodiment, at the junction between the preforms is placed the filling element according to the present invention, comprising a filling body (1) made of polyurethane or silicone and joining tapes (4).

Also in this embodiment, the polyurethane or silicone filling body (1) is formed by extrusion, injection molding or lamination to the desired shape, and the joining tapes (4) are also preferably made of polyurethane.

## Claims

1. Filling element for the manufacture of aircraft parts, **characterized in that** it comprises a filling body (1) made of polyurethane or silicone.

2. Filling element for the manufacture of aircraft parts according to claim 1, also comprising joining tapes (4).

3. Filling element for the manufacture of aircraft parts according to claim 2, wherein the joining tapes (4) are made of polyurethane.

4. Aircraft part, comprising a plurality of preforms (2, 3) joined together, **characterized in that** it comprises a filling element according to any one of the preceding claims.

5. Aircraft part according to claim 4, wherein the filling element is located between the preforms (2, 3).

6. Aircraft part according to claim 4 or 5, wherein said preforms (2, 3) are made of glass fiber reinforced plastic material.
